# EUROPEAN PATENT SPECIFICATION

(11) **EP 3 256 721 B1**
(45) Date of publication and mention of the grant of the patent: **20.03.2019**
(21) Application number: 16715906.0
(22) Date of filing: 07.01.2016
(51) Int. Cl.: F03D 5/00

(54) **IMPROVED INFRASTRUCTURE FOR DRIVING KITES OF A TROPOSPHERIC WIND GENERATOR**
VERBESSERTE INFRASTRUKTUR ZUM ANTREIBEN VON DRACHEN EINES TROPOSPHÄRISCHEN WINDGENERATORS
INFRASTRUCTURE AMÉLIORÉE POUR ENTRAÎNER DES CERF-VOLANTS D'UNE GÉNÉRATRICE ÉOLIENNE TROPOSPHÉRIQUE

(30) Priority: 10.02.2015 IT TO20150089
(43) Date of publication of application: 20.12.2017
(73) Proprietor: Kite Gen Research S.R.L., 10099 San Mauro Torinese (TO) (IT)
(72) Inventor: IPPOLITO, Massimo, 100072 Caselle Torinese (TO) (IT)
(74) Representative: Garavelli, Paolo
(86) International application number: PCT/IT2016/000002
(87) International publication number: WO 2016/129004

(56) References cited:
- US-A1- 2011 074 161

## Description

The present invention refers to an improved infrastructure for driving kites of a tropospheric wind generator.

In particular, the present invention refers to a variable geometry system connected to a sail through tethers to allow operating a tropospheric wind generator.

A variable geometry system comprises at least one stem adapted to perform the function of a robotic arm with sensors made of lightweight materials, such as aluminium and carbon fibre, assembled on a rotary turret constrained to a carrier structure by means of a rotation enabling element.

The great majority of failures in take-offs (kite-crashes) or in flight manoeuvres occurs at a low height. The stem allows keeping the sail at a suitably far height from the ground to be therebyable to exploit the more intense wind present at 15-20 m of height from the earth. At a certain height with respect to the ground, the sail has more chances to find wind with a speed enough to allow the take-off.

Movement and degrees of freedom of the stem allow performing quick manoeuvres adapted to generate an apparent wind enough to lift off the sail when flying also in case of very weak winds.

The stem allows the tethers going out of the alternators and the winches to remain aligned for many meters, reducing fatigue and vibrations on electromechanical components of alternators and winches.

Placed along the stem, sensor adapted to send to the control unit information about current mechanical deformations and position of the stem, comprise extension-meters adhering to the carrier structure of the stem and encoders adapted to measure the rotation angles of the stem with respect to an internal space reference.

The sail transmits to the stem the force impressed by wing through the tethers. The deformation sensors sent information to the control unit to allow adequately responding when there are too intense wind bursts, with manoeuvres adapted to move the sail away from the power window, reducing the mechanical stress. During the processing time, the stem allows absorbing the mechanical stress through a suitable elastic deformation, safeguarding the most delicate mechanical components.

The stem top supports a compass to increase the degrees of freedom of the tether sections adapted to manoeuvre the sail. In particular, such compass comprises a pair of rods adapted to be opened wide to keep the tethers separate during the manoeuvres and avoid weaves, twists and overlapping.

According to site orography, winds can change their prevailing direction more or less quickly during the seasons or also during the same day. By rotating in compliance with wind directions, the stem always allows placing the sail according to the maximum power window.

The state of the art of a variable geometry system of a tropospheric wind generator is given by Patent Application WO-A-2009147692 dealing with an optimized infrastructure to allow the assisted take-off and the driving of kites which convert wind kinetic energy into mechanical energy during the operation of a tropospheric wind generator. The infrastructure is composed of an arm which can be oriented in the space and suitable deformed in order to reduce the overturning moment due to the traction forces operating on the control tethers of the kites. The infrastructure is also equipped with an artificial venting plant capable of allowing the assisted take-off of the kites in case of absence or low intensity of natural wind.

The solution of Patent Application WO2009147692 allows the kite to take off and reach the operating heights at any time, automatically and independently from ground wind conditions, by means of a pair of axial fans placed in a tube and actuated by electric motors. Under operating conditions, when the whole wind force operating on the wing acts on the control tethers, the structure must be able to be elastically deformed or be able to be conveniently oriented through mechanical junctions, instead of stiffly counteracting the operating forces, thereby reducing the lever arm on which the overturning moment depends and allowing a particularly lightweight and economic structural dimensioning. The use of kites with two tethers requires that, in the rest position, waiting for the take-off, the wing is completely deployed and suitably oriented with respect to natural wind or the sum of this latter one and the artificial wind generated by fans to facilitate the manoeuvre at a maximum. For such purpose, in addition to the turret, two terminal arms are further provided, which can be opened as a compass, with suitable sizes depending on wing sizes. At the beginning of the take-off step, the kite keeps a particular flight attitude in which the resultant of the aerodynamic forces is mainly composed of the resistance. Proceeding along the rise trajectory, with the increase of the height and consequently of the atmospheric wind, the apparent speed given by the vector sum of flight speed and of wind speed, allows the gradual transition, made by the electronic control, towards a flight attitude in which the resultant of aerodynamic forces is mainly composed of the lift. The kite, at the beginning of the take-off step, is in a particular balance situation where the rotation around the axis represented by the bisector of the tethers, is one degree of freedom out of a direct control and could oscillate with the cyclical rotations supplied by wind. For this reason, it is important that the profile is set along a direction which is inertially kept for a time enough for a minimum of aerodynamic lift to occur, and this enables the control to direct the kite in its moving away and height acquiring manoeuvres. The turret with the end arms will be oriented downwind, in case a flow of natural air is present, since this guarantees that, in the take-off step, there are no possible physical interferences between the structure and he moving away of the profile. The accurate alignment with the flown should further act as an improvement on the latency time of the chance of controlling the profile when it moves away. The procedure of recovering the kites is based on a quick rewinding o the tethers with an adequate length differential in order to use a manoeuvre which can be assimilated to a sideslip where the profile loses height by waving as a flag. Document US2011/074161 represents the closest prior art and is the basis for the preamble of claim 1.

Object of the present invention is providing a new solution to improve the operation and increase the versatility of a tropospheric wind generator, above all in the step of take-off of the sail.

A further object is modifying the diagram of the load induced by the overturning moment along a variable geometry system used for driving the sail to be able to solve the problem of a load concentration acting on the arm joints arranged as a compass.

A further object is making a new variable geometry system capable of removing the artificial venting system necessary to make the sail take-off when there is no ground wind.

The above and other objects and advantages of the invention, as will appear from the following description, are obtained with an improved infrastructure for driving kites of a tropospheric wind generator as claimed in claim 1. Preferred embodiments and non-trivial variations of the present invention are the subject matter of the dependent claims.

It is intended that all enclosed claims are an integral part of the present description.

It will be immediately obvious that numerous variations and modifications (for example related to shape, sizes, arrangements and parts with equivalent functionality) can be made to what is described, without departing from the scope of the invention as appears from the enclosed claims.

The present invention will be better described by some preferred embodiments, provided as a nonlimiting example, with reference to the enclosed drawings, in which:
Figure 1 shows an axonometric view of an embodiment of the improved infrastructure for driving kites of a tropospheric wind generator, according to the present invention;

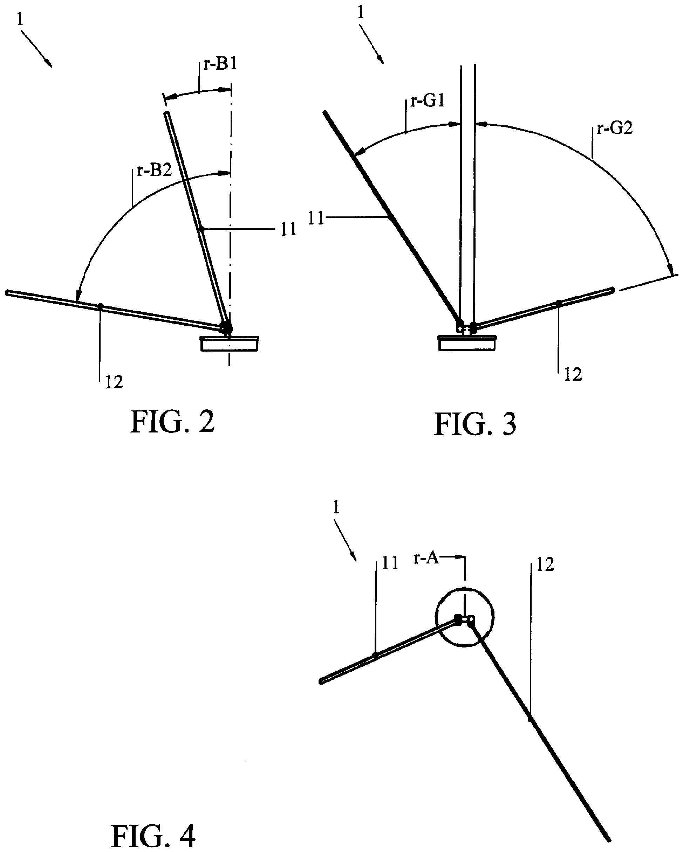

Figures 2, 3 and 4, show orthogonal projection views of Figure 1;
Figure 5 shows an enlarged detail V of Figure 1;
Figure 6 shows an enlarged detail VI of Figure 2;
Figure 7 shows an enlarged detail VII of Figure 3; and
Figure 8 shows an enlarged detail VIII of Figure 4.

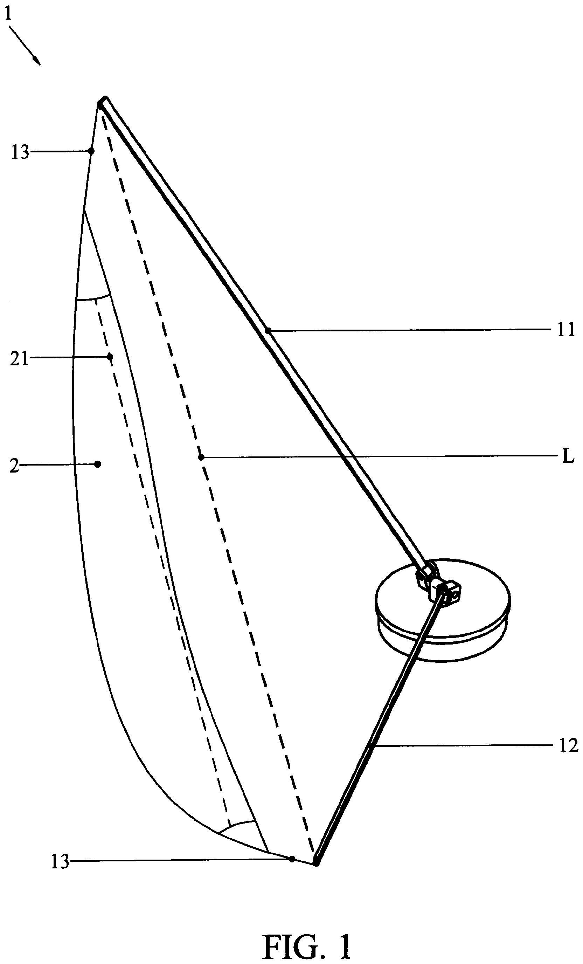

With reference to Figure 1, it is possible to note that an infrastructure of a tropospheric wind generator comprises a variable geometry system 1 to drive at least one sail 2.

The variable geometry system 1 is composed of at least one pair of arms 11, 12 adapted to deviate tethers 13 to be able to drive the sail 2.

According to the present invention, the variable geometry system 1 allows increasing a wing opening 21 of the sail 2 to favour its take-off.

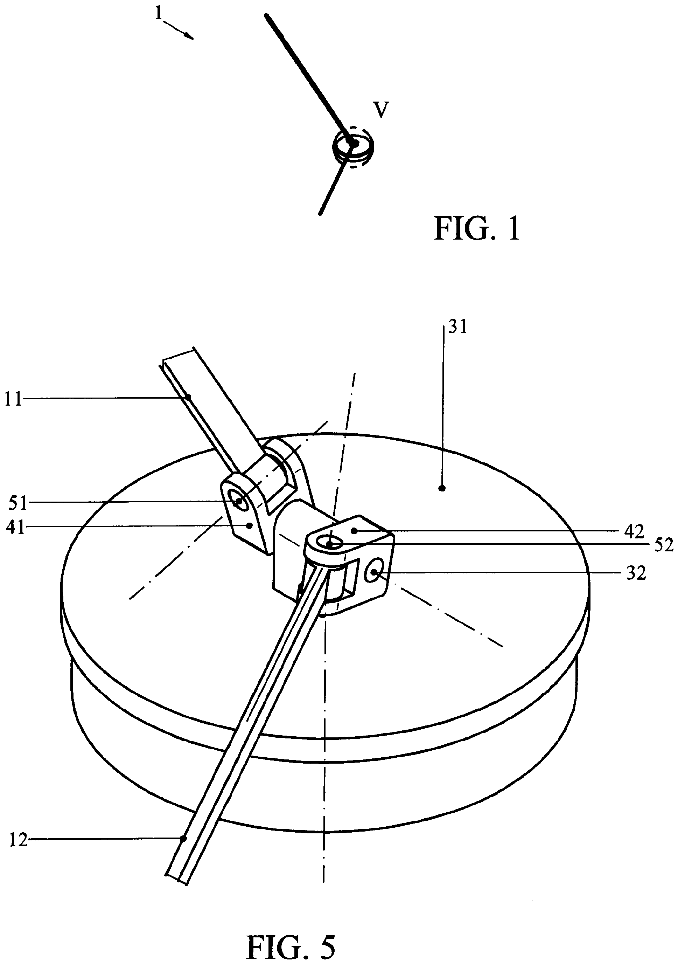

With reference to Figure 5, the variable geometry system 1 comprises junction means 31, 32, 41, 42, 51, 52 adapted to connect the pair of arms 11, 12 to the infrastructure base to be able to orient each arm 11, 12 in elevation and swing.

In fact, the arms 11, 12 allow deviating the tethers 13 to increase the wing opening 21 of the sail 2, Figure 1.

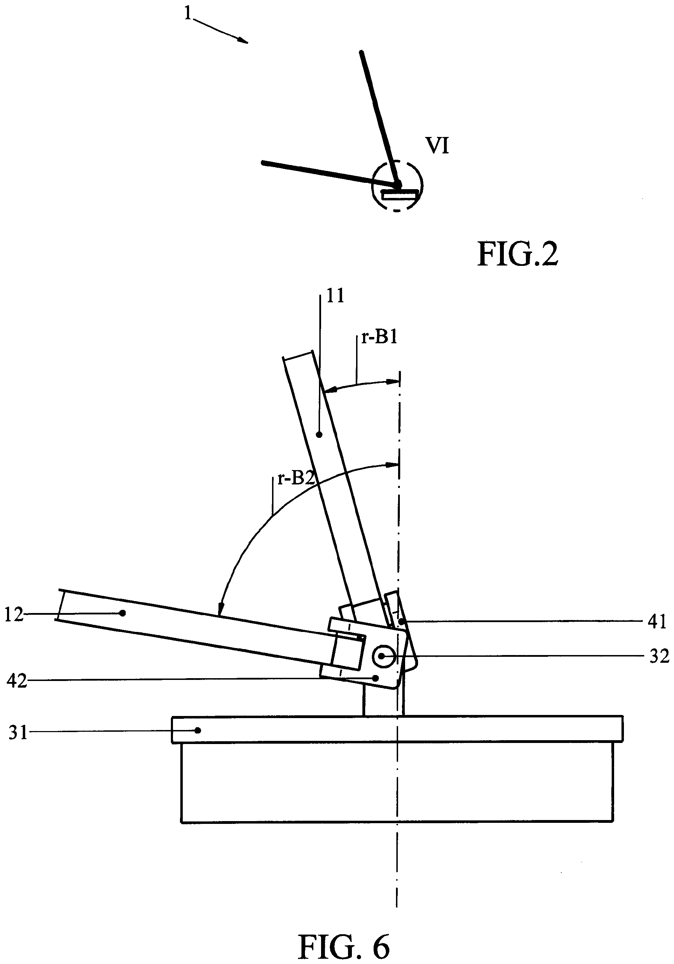

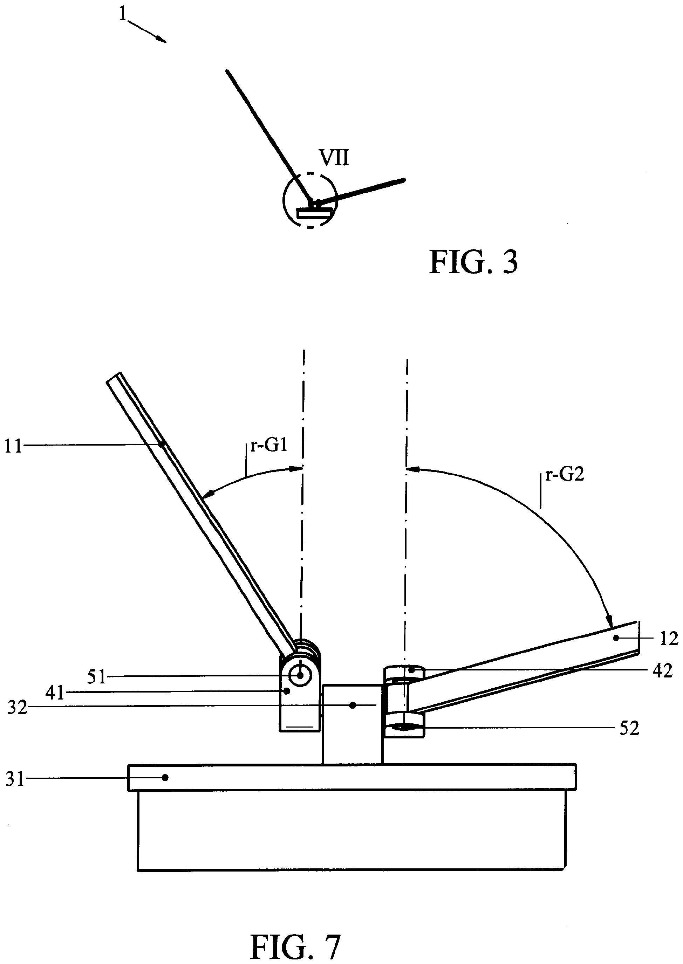

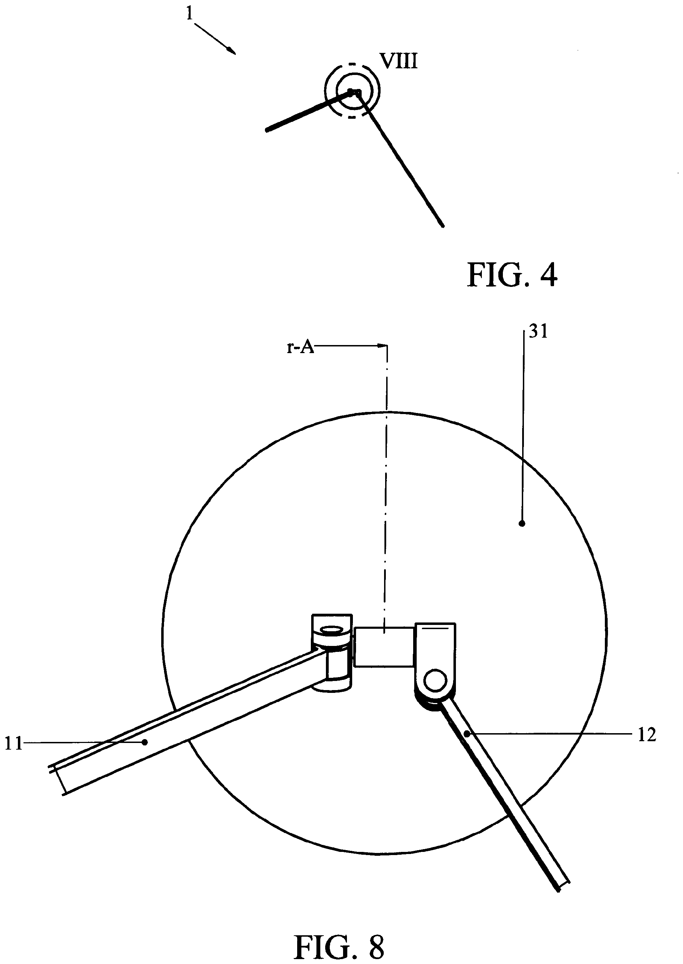

With reference to Figures 8, 6, 7, the junction means of the pair of arms 11, 12, with respect to the infrastructure comprise:
- a rotating base 31 to allow a rotation r-A of the variable geometry system 1 with respect to the infrastructure. Such rotation r-A allows placing the sail according to the maximum power window, Figure 8;
- a pair of rotating hubs 41, 42 with respect to a first pin 32 integral with the rotating base 31 to allow orienting each arm 11, 12 in elevation according to an angle r-B1, r-B2, with respect to the rotating base 31, and independently, Figure 6; and
- a pair of second rotating hubs 51, 52 with respect to the hubs 41, 42 to be able to orient each arm 11, 12 in swing according to an angle r-G1, r-G2, with respect to the rotating base 31, and independently, Figure 7.

The arms 11, 12 have their ends connected to the junction means 31, 32, 41, 42, 51, 52 to allow their opposite ends to deviate the tethers 13. In this way, it is possible to increase the wing opening 21 of the sail 2, as function of a distance L of the opposite ends of the arms 11, 12.

In particular, by opening wide the arms 11, 12 both in elevation and in swing, it is possible to stretch the sail 2, approximately along the distance L of the opposite ends of the arms 11, 12.

The variable geometry system 1 is controlled by means of actuators (not shown) connected to the junction means 31, 32, 41, 42, 51, 52 to allow driving the sail 2.

Means for winding and unwinding (not shown) the tethers 13 and means for transforming mechanical energy into electrical energy (not shown) complete the infrastructure of a tropospheric wind generator of the present invention.

The variable geometry system 1 can also be made so that each one of the arms 11, 12, independently or together with the other, is obtained with a telescopic structure (not shown) which allows changing the relative length, in order to further increase the field of application of the system 1, simultaneously obtaining also the functions of dampening of operating speed, of actuator and of sensor.

The infrastructure allows obtaining the scopes of the invention. In particular, with an angular opening of about 80°, it is possible to reach a distance of the ends of the due arms equal to about 50 meters, capable of allowing to stretch a big-sized sail and of allowing the take-off in a site with null ground wind.

With respect to the solution with arms arranged as a compass at the ends of a single stem, the solution of the invention with double arm connected to the infrastructure base allows improving the drivability and distributing the load induced by the overturning moment, optimally along the structure of each arm.

The solution of the invention solves the problem of dimensioning the arms connected to a stem, removing the stem itself and increasing the arm extension till the junction at the infrastructure base.

The solution of the invention allows stretching the sail without touching the ground, by simply opening the arms wide, allowing to remove the necessary fans for taking the sail off without wind.

## Claims

1. Infrastructure of a tropospheric wind generator comprising a variable geometry system (1) for driving at least one sail (2), **characterized in that** said variable geometry system (1) is composed of:
- at least one pair of arms (11, 12) adapted to deviate tethers (13) to be able to drive said sail (2) to increase a wing opening (21) of said sail (2) to favour its take-off, and
- junction means (31, 32, 41, 42, 51, 52) adapted to connect said pair of arms (11, 12) to a base of the infrastructure to be able to orient each one of said arms (11, 12) in elevation and swing by deviating said tethers (13) for increasing said wing opening (21),
**characterized in that** said junction means (31, 32, 41, 42, 51, 52) comprise a rotating base (31) to allow a rotation (r-A) of the variable geometry system (1) with respect to the infrastructure in order to position the sail according to a maximum power window, a pair of rotating hubs (41, 42) with respect to a first pin (32) integral with said rotating base (31) to allow orienting each one of said arms (11, 12) in elevation according to an angle (r-B1, r-B2), with respect to said rotating base (31), and independently, and a pair of second rotating hubs (51, 52) respectively with respect to said pair of hubs (41, 42) to allow orienting each one of said arms (11, 12) in swing according to an angle (r-G1, r-G2), with respect to said rotating base (31), and independently.

2. Infrastructure of a tropospheric wind generator according to the previous claim, **characterized in that** said arms (11, 12) connected at their ends to said junction means (31, 32, 41, 42, 51, 52) to allow their opposite ends to deviate said tethers (13) increase said wing opening (21) as function of a distance (L) of the opposite ends of said arms (11, 12).

3. Infrastructure of a tropospheric wind generator according to the previous claim, **characterized in that** said arms (11, 12) wide apart both in elevation and in swing stretch said sail (2), approximately along said distance (L).

4. Infrastructure of a tropospheric wind generator according to any one of the previous claims, **characterized in that** said variable geometry system (1) controlled for driving said sail (2) comprises actuators connected to said junction means (31, 32, 41, 42, 51, 52).

5. Infrastructure of a tropospheric wind generator according to any one of the previous claims, **characterized in that** it comprises means for winding and unwinding said tethers (13) and means for transforming mechanical energy into electrical energy.

6. Infrastructure of a tropospheric wind generator according to claim 1, **characterized in that** each one of the arms (11, 12), independently or together with the other one, is obtained with a telescopic structure which allows changing the length of the arm (11, 12).

## Patentansprüche

1. Infrastruktur eines Troposphären-Windgenerators, die ein System mit variabler Geometrie (1) enthält, um mindestens ein Segel (2) zu manövrieren, das genannte System mit variabler Geometrie (1) ist folgendermaßen zusammengesetzt:
- mindestens ein Paar Arme (11, 12), die dazu dienen, Kabel (13) umzulenken, um das genannte Segel (2) manövrieren zu können, um die Flügelöffnung (21) des genannten Segels (2) zu erhöhen und den Start zu fördern, und
- Verbindungsvorrichtungen (31, 32, 41, 42, 51, 52), die dazu dienen, das genannte Paar Arme (11, 12) mit einer Basis der Infrastruktur zu verbinden, um jeden der genannten Arme (11, 12) beim Heben und Schwenken ausrichten zu können, indem die genannten Kabel (13) umgelenkt werden, um die genannte Flügelöffnung (21) zu erhöhen,
und **dadurch gekennzeichnet, dass** die genannten Verbindungsvorrichtungen (31, 32, 41, 42, 51, 52) eine Drehbasis (31) enthalten, um eine Drehung (r-A) des Systems mit variabler Geometrie (1) gegenüber der Infrastruktur zu ermöglichen, um das Segel entsprechend einem Höchstleistungsfenster zu positionieren, ein Paar Drehnaben (41, 42) gegenüber einem ersten Bolzen (32), der einteilig mit der genannten Drehbasis (31) ist, um zu ermöglichen, jeden der genannten Arme (11, 12) beim Anheben entsprechend einem Winkel (r-B1, r-B2) gegenüber der genannten Drehbasis (31) und unabhängig auszurichten, und ein Paar zweiter Drehbolzen (51, 52) entsprechend gegenüber dem genannten Paar Naben (41, 42), um zu ermöglichen, jeden der genannten Arme (11, 12) beim Schwenken entsprechend einem zweiten Winkel (r-G1, r-G2) gegenüber der genannten Drehbasis (31) und unabhängig auszurichten.

2. Infrastruktur eines Troposphären-Windgenerators gemäß dem vorhergehenden Patentanspruch, die **dadurch gekennzeichnet ist, dass** die genannten Arme (11, 12), die an ihren Enden mit den genannten Verbindungsvorrichtungen (31, 32, 41, 42, 51, 52) verbunden sind, die genannte Flügelöffnung (21) aufgrund eines Abstandes (L) der entgegen gesetzten Enden der genannten Arme (11, 12) erhöhen, um ihren entgegen gesetzten Enden zu ermöglichen, die genannten Kabel (13) umzulenken.

3. Infrastruktur eines Troposphären-Windgenerators gemäß dem vorhergehenden Patentanspruch, die **dadurch gekennzeichnet ist, dass** die genannten Arme (11, 12) gespreizt sowohl beim Heben als auch beim Schwenken das genannte Segel (2) annäherungsweise längs des genannten Abstandes (L) ausbreiten.

4. Infrastruktur eines Troposphären-Windgenerators gemäß einem der vorhergehenden Patentansprüche, die **dadurch gekennzeichnet ist, dass** das genannte System mit variabler Geometrie (1), das gesteuert wird, um das genannte Segel (2) zu manövrieren, Antriebe enthält, die mit den genannten Verbindungsvorrichtungen (31, 32, 41, 42, 51, 52) verbunden sind.

5. Infrastruktur eines Troposphären-Windgenerators gemäß einem beliebigen der vorhergehenden Patentansprüche, die **dadurch gekennzeichnet ist, dass** sie Aufroll- und Umlenkvorrichtungen der genannten Kabel (13) und Vorrichtungen für die Umwandlung der mechanischen in elektrische Energie enthält.

6. Infrastruktur eines Troposphären-Windgenerators gemäß Patentanspruch 1, die **dadurch gekennzeichnet ist, dass** jeder der Arme (11, 12) unabhängig oder zusammen mit dem anderen durch eine Teleskopstruktur erhalten wird, die es ermöglicht, die Länge des Armes (11, 12) zu ändern.

## Revendications

1. Infrastructure d'un générateur éolien troposphérique comprenant un système à géométrie variable (1) pour manoeuvrer au moins une voile (2), le système à géométrie variable (1) étant composé de :
- au moins une paire de bras (11, 12) aptes à dévier des câbles (13) pour pouvoir manoeuvrer la voile (2) et augmenter son envergure (21) afin de favoriser le décollage, et
- des moyens de raccordement (31, 32, 41, 42, 51, 52) aptes à relier la paire de bras (11, 12) à une base de l'infrastructure pour pouvoir orienter chaque bras (11, 12) en élévation et pivotement en déviant les câbles (13) pour augmenter l'envergure (21),
**caractérisée en ce que** les moyens de raccordement (31, 32, 41, 42, 51, 52) comprennent une base tournante (31) pour permettre une rotation (r-A) du système à géométrie variable (1) par rapport à l'infrastructure pour positionner la voile selon une gamme de puissance maximale ; une paire de moyeux tournants (41, 42) sur un premier goujon (32) solidaire de la base tournante (31) pour pouvoir orienter en élévation selon un angle (r-B1, r-B2), par rapport à la base tournante (31), et de manière indépendante, chaque bras (11, 12) ; et une paire de seconds goujons tournants (51, 52) respectivement par rapport à la paire de moyeux (41, 42) pour pouvoir orienter en pivotement selon un angle (r-G1, r-G2), par rapport à la base tournante (31), et de manière indépendante, chaque bras (11, 12).

2. Infrastructure d'un générateur éolien troposphérique, selon la revendication précédente, **caractérisée en ce que** les bras (11, 12) sont reliés à leurs extrémités par les moyens de raccordement (31, 32, 41, 42, 51, 52) pour permettre à leurs extrémités opposées de dévier les câbles (13) en augmentant l'envergure (21) en fonction d'une distance (L) des extrémités opposées des bras (11, 12).

3. Infrastructure d'un générateur éolien troposphérique, selon la revendication précédente, **caractérisée en ce que** les bras (11, 12) écartés aussi bien en élévation qu'en pivotement étirent la voile (2), approximativement le long de la distance (L).

4. Infrastructure d'un générateur éolien troposphérique selon l'une des revendications précédentes, **caractérisée en ce que** le système à géométrie variable (1) contrôlé pour manoeuvrer la voile (2) comprend des actionneurs reliés aux moyens de raccordement (31, 32, 41, 42, 51, 52).

5. Infrastructure d'un générateur éolien troposphérique, selon l'une des revendications précédentes, **caractérisée en ce qu'**elle comprend des moyens d'enroulement et de renvoi des câbles (13) et des moyens de transformation de l'énergie mécanique en énergie électrique.

6. Infrastructure d'un générateur éolien troposphérique, selon la revendication 1, **caractérisée en ce que** chaque bras (11, 12), individuellement ou à deux, est réalisé à l'aide d'une structure télescopique permettant de modifier la longueur du bras (11, 12).
